# EUROPÄISCHE PATENTSCHRIFT

(11) **EP 0 982 081 B1**
(45) Veröffentlichungstag und Bekanntmachung des Hinweises auf die Patenterteilung: **19.12.2001**
(21) Anmeldenummer: 99113590.6
(22) Anmeldetag: 08.07.1999
(51) Int. Cl.: B07B 4/02, C01B 33/02

(54) **Windsichten für Polysilicium**
Pneumatic classification for polysilicon
Classification pneumatique de polysilicium

(30) Priorität: 27.08.1998 DE 19839024
(43) Veröffentlichungstag der Anmeldung: 01.03.2000
(73) Patentinhaber: Wacker-Chemie GmbH, 81737 München (DE)
(72) Erfinder: Flottmann, Dirk, Dr., 84503 Altötting (DE); Schantz, Matthäus, 84367 Reut (DE); Heiss, Johann, 84529 Tittmoning (DE)
(74) Vertreter: Fritz, Helmut, Dr.

(56) Entgegenhaltungen:
- DE-A- 2 556 548
- DE-A- 2 852 313
- US-A- 4 857 173

## Beschreibung

Die Erfindung betrifft eine Vorrichtung und ein Verfahren zum Klassieren von Halbleiterbruch.

Zahlreiche Halbleitermaterialien müssen für den Schmelzvorgang im Tiegel zerkleinert werden. Hierbei ist von entscheidender Bedeutung, daß mit dem Halbleiterbruch keine Verunreinigungen und Feinstaub in den Tiegel gelangen. Die Verunreinigungen können dabei im Bulk des Materials sitzen oder an dessen Oberfläche. Bisher werden Verunreinigungen an der Oberfläche, wie sie zum Beispiel durch den Brechvorgang oder durch die bisher bestehenden Sieb, Sicht- und Klassierverfahren entstehen, in Wasserbädern oder in Säurebädern entfernt. Der Nachteil dieser Reinigungsverfahren sind die geringe Effektivität und die hohen Kosten für den Säureeinsatz. Der äußerst unerwünschte Kunststoffabrieb, erzeugt durch die Kanten der Bruchstäbe, kann durch den Säureeinsatz im allgemeinen nicht entfernt werden.

Das Sieben z.B. des Polysiliciums mittels eines Trockensiebes führt durch den dauernden Materialkontakt und die permanente Beanspruchung des Siebmaterials zu Kontaminationen, Abrieb und Feinstaub, die sich als störende Größen in der Produktqualität bemerkbar machen. Hinzu kommt eine schnelle Verstopfung der Öffnungen, z.B. der Spalten eines Stangensiebes oder der Öffnungen eines Lochsiebes, durch die unregelmäßige Kornform des polykristallinen Siliciums.

Auch durch das Naßklassieren ist keine reproduzierbare und genaue Kornklasseneinstellung möglich, weil durch die Adhäsionskräfte die kleinen Stücke aneinander und vor allem an den größeren Bruchstücken haften. Hierdurch wird nicht nur die Kornklasseneinstellung, sondern auch das Austragen des Materials schwierig.

Zum Austrag des Feinkorns und Staubes (max. Ausdehnung der Bruchstücke kleiner 2 cm) ist auch das optoelektrische Klassieren derzeit noch ungeeignet, weil die digitale Meßtechnik Teilchenströme größere 6000 Teile/sec bei den oben angegebenen Dimensionen noch nicht verarbeiten kann.

Es ist Aufgabe der Erfindung die Nachteile des Standes der Technik zu überwinden und insbesondere Halbleiterbruch kontaminationsfrei zu klassieren.

Gegenstand der Erfindung ist eine Vorrichtung zum Klassieren, die zumindest eine verschwenkbare beziehungsweise verschiebbare Blasevorrichtung und zumindest eine Ablenkvorrichtung aufweist.

Die erfindungsgemäße Vorrichtung wird anhand der schematischen Darstellungen näher erläutert.

Es zeigen:
Figur 1 einen schematischen Querschnitt durch eine erfindungssgemäße Vorrichtung
Figur 2 einen schematischen Schnitt gemäß der Linie II-II in Figur 1.

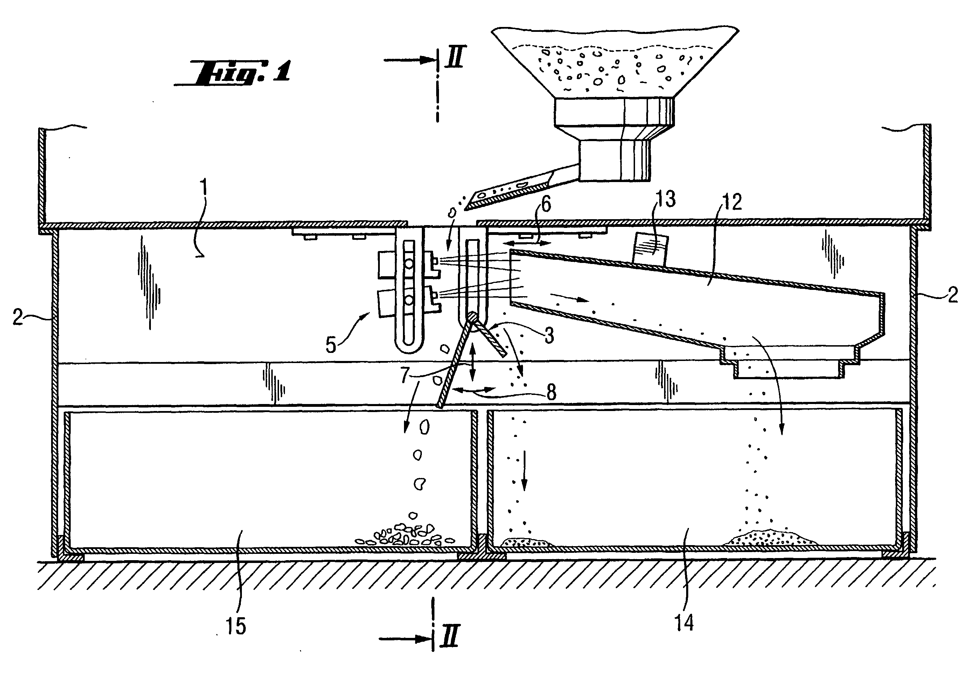

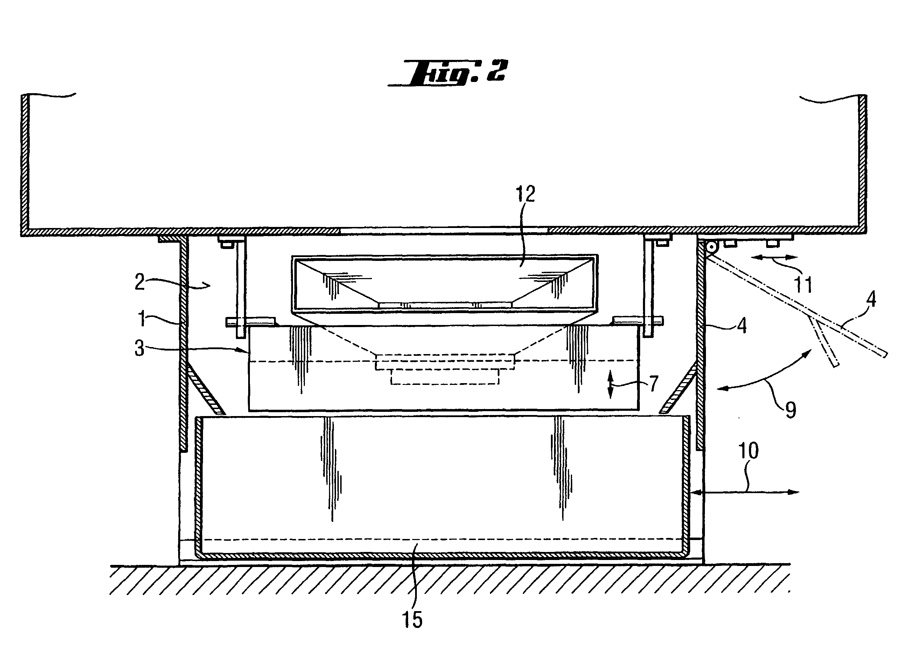

Die erfindungsgemäße Vorrichtung gemäß Figur 1 und 2 weist im wesentlichen eine Rückwand 1 und eine der Rückwand gegenüberliegende Frontwand 4 sowie, diese verbindende Seitenwände 2 auf. Innenseitig an der Rückwand 1 sowie der Frontwand 4 sind nach innen gerichtete Abweisbleche vorgesehen.

Die Frontwand 4 ist um eine horizontale Längsachse verschwenkbar und/oder gemäß Pfeil 11 horizontal verschiebbar, derart, daß der Innenraum z.B. für Wartungsarbeiten zugänglich ist bzw. die innerhalb der Wände angeordneten Auffangwannen 14, 15 für das getrennte Material im Bereich der Frontwand 4 über Führungsschienen aus der Vorrichtung entnommen oder zugeführt werden können. Der Verschwenkwinkel 9 der Frontwand 4 beträgt vorzugsweise 0° bis 120°, besonders bevorzugt 80° bis 90°. Des weiteren weist die Vorrichtung eine die Wände 1, 2 und 4 im wesentlichen überspannende Deckwand auf, welche im mittleren Bereich mit vorzugsweise einer Eingabeöffnung zur Zuführung von zu klassierenden Halbleiterbruch versehen ist.

Die erfindungsgemäße Vorrichtung ist zum Klassieren von vorzugsweise Halbleiterbruch bestimmt. Der Halbleiterbruch wird über eine in Figur I schematisch angedeutete Zuführeinrichtung mit einer im Neigungswinkel einstellbaren schrägen Rinne der Vorrichtung zugeführt, derart, daß aufgrund der schrägen Zuführrinne und der vertikal wirkenden Schwerkraft der Halbleiterbruch in einer gekrümmten Bahn in den Wirkbereich des Luftkegel verbracht wird. Die Düsenleiste der Blasvorrichtung 5 weist mindesten eine, bevorzugt bis zehn oder mehr Einzeldüsen auf, wobei mehrere Reihen übereinander angeordnet sein können. Eine Anordnung der Düsen nebeneinander ist prinzipiell auch möglich. Ziel ist es über die genutzte Wirkbreite einen homogenen Luftstrom zu erhalten. Die Düsen sind vorzugsweise 0° bis 20° von der Bodengrundlinie weggerichtet. Aus den Düsen wird vorzugsweise Gas, z.B. Luft oder auch ein Inertgas z.B. Stickstoff mit einem auf das zu klassierenden Material bzw. auf das Klassierungsziel abgestimmten Druck von vorzugsweise 1 bis 4 bar ausgeblasen. Es kann auch von Vorteil sein, die Düsen mit Flüssigkeit, z.B. Wasser zu betreiben. Die Blasvorrichtung ist vorzugsweise horizontal/vertikal verschiebbar bzw. verschwenkbar gelagert.

Durch diese Art der Zuführung des Halbleiterbruches werden die unregelmäßig geformten Halbleiterbruchstücke mit ihrem Schwerpunkt voran in den Wirkraum der Blasevorrichtung 5 geführt, so daß der Hauptimpuls der Luft auf den Schwerpunkt gerichtet ist. Hierdurch wird die Sicherheit und Reproduzierbarkeit der Auschleusung gewährleistet.

Unterhalb der Blasevorrichtung 5 ist eine Ablenkvorrichtung 3 vorgesehen, welche im wesentlichen durch zwei dachförmig angeordnete Bleche gebildet ist. Der Dachfirst der Ablenkvorrichtung 3 ist dabei quer zur Ausblasrichtung der Düsen ausgerichtet und gemäß den Pfeilen 6 und 7 in horizontaler und vertikaler Richtung einstellbar ausgeführt, derart, daß der Klassierungsgrad entsprechend geregelt werden kann. Die Ablenkvorrichtung 3 wird über Lagerzapfen gemäß dem Pfeil 8 im Bereich von 0° bis 90°, bevorzugt 0° bis 20° verschwenkbar gehalten, wobei der Winkel, der die Dachflächen bildenden Bleche der Ablenkvorrichtung 3, die vorzugsweise bis zur Blasvorrichtung 5 verschiebbar ist, vorzugsweise 45° bis 120°, besonders bevorzugt 85° bis 90° beträgt. Dabei wird der Feinstaub des auszuschleusenden Bruches über die Ablenkvorrichtung 3 in die Auffangwanne 14 überführt, wahrend der größer dimensionierte Anteil des auszuschleusenden Halbleiterbruches in die Auffangwanne 15 fällt. Vorzugsweise kann der Feinstaub auch über einen Sammler 12 in die Auffangwanne 14 gefördert werden. Gemäß Pfeil 10 können die Auffangwannen 14 und 15 aus der Vorrichtung entnommen werden.

Der auszuschleusende Massenanteil wird durch den Luftdruck in den Düsen und durch die relative Lage zur Ablenkvorrichtung (3) bestimmt. Es kann damit Halbleitermaterial von Teilchen, deren Durchmesser vorzugsweise im Bereich von 1 µm bis 20 mm, bevorzugt 1 µm bis 10 mm liegt, reproduzierbar klassiert werden. Dies hängt von der Blasleistung und Stärke des Saugstroms und der Höhe der Trennvorrichtung ab, die vorzugsweise zwischen 10 cm bis 100 cm liegt. Der Sammler (12) kann mit einem Schwingungsgenerator (13) versehen werden, der bewirkt, daß der Feinstaub besser gefördert wird.

Ein weiterer Gegenstand der Erfindung ist ein Verfahren zum Klassieren von Halbleitermaterial, wobei es durch eine verschwenkbare beziehungsweise verschiebbare Blasevorrichtung geführt wird und über eine Ablenkvorrichtung aussortiert wird. Diese Vorrichtung ist oben beschrieben.

Nach dem erfindungsgemäßen Verfahren wird ein definierter Gewichtsanteil einer definierten Kornklasse entfernt.

Bevorzugt wird das erfindungsgemäße Verfahren für das Klassieren von polykristallinem oder monokristallinem Siliciumbruch oder von Bruch anderen Halbleitermaterials, wie Galliumarsenid verwendet.

Ein Vorteil der Erfindung ist es, daß Kontamination und Abriebe durch das Klassieren in der Luft verringert werden und daß durch die besondere Materialführung die unregelmäßigen Halbleiterbruchstücke auf ein und dieselbe Weise erfaßt und reproduzierbar ausgeschleust werden.

## Patentansprüche

1. Vorrichtung zum Klassieren, die zumindest eine verschwenkbare beziehungsweise verschiebbare Blasevorrichtung und zumindest eine Ablenkvorrichtung aufweist.

2. Vorrichtung nach Anspruch 1, **dadurch gekennzeichnet, daß** die Blasevorrichtung mehrere übereinander angeordnete Düsen aufweist.

3. Vorrichtung nach Anspruch 1, **dadurch gekennzeichnet, daß** die Ablenkvorrichtung horizontal und vertikal verschiebbar ist.

4. Verfahren zum Klassieren von Halbleitermaterial, **dadurch gekennzeichnet, daß** es durch eine verschwenkbare beziehungsweise verschiebbare Blasevorrichtung geführt wird und über eine Ablenkvorrichtung aussortiert wird.

5. Verfahren nach Anspruch 4, **dadurch gekennzeichnet, daß** ein definierter Gewichtsanteil einer definierten Kornklasse entfernt wird.

## Claims

1. Classification device which has at least one pivotable or displaceable blower device and at least one deflector device.

2. Device according to Claim 1, **characterized in that** the blower device has a plurality of nozzles arranged above one another.

3. Device according to Claim 1, **characterized in that** the deflector device can be displaced horizontally and vertically.

4. Method for classifying semiconductor material, **characterized in that** it is guided through a pivotable or displaceable blower device and is graded by means of a deflector device.

5. Method according to Claim 4, **characterized in that** a defined weight fraction of a defined grain size is removed.

## Revendications

1. Dispositif de classification, qui présente au moins un dispositif de soufflage pivotable, ou déplaçable, et au moins un dispositif de déviation.

2. Dispositif selon la revendication 1, **caractérisé en ce que** le dispositif de soufflage présente plusieurs tuyères disposées les unes au-dessus des autres.

3. Dispositif selon la revendication 1, **caractérisé en ce que** le . dispositif de déviation est déplaçable horizontalement et verticalement.

4. Procédé de classification de matériau semiconducteur, **caractérisé en ce que** ce matériau est guidé par un dispositif de soufflage pivotable ou déplaçable et est extrait par le biais d'un dispositif de déviation.

5. Procédé selon la revendication 4, **caractérisé en ce qu'**une proportion pondérale définie d'une classe de granulométrie définie est éliminée.
